Europäisches Patentamt

European Patent Office

Office européen des brevets

(11) Publication number: **0 347 106**
**A1**

## (12) EUROPEAN PATENT APPLICATION

(21) Application number: **89305814.9**

(22) Date of filing: **09.06.89**

(51) Int. Cl.⁴: **B23K 1/00 , B23K 35/36 , B23K 35/38 , C23C 8/10**

(30) Priority: **14.06.88 GB 8814056**

(43) Date of publication of application:
**20.12.89 Bulletin 89/51**

(84) Designated Contracting States:
**AT BE CH DE ES FR GB IT LI NL SE**

(71) Applicant: **ALCAN INTERNATIONAL LIMITED**
**1188 Sherbrooke Street West**
**Montreal Quebec H3A 3G2(CA)**

(72) Inventor: **Ross, Robert Anderson**
**R.R.1, Box 45**
**Kingston Ontario K7L 4V1(CA)**
Inventor: **Lemay, Rejean**
**7 Bayswater Place No. 322**
**Kingston Ontario(CA)**
Inventor: **Smith, Frank Neale**
**121 Westmoreland Road**
**Kingston Ontario(CA)**

(74) Representative: **Pennant, Pyers et al**
**5 Quality Court Chancery Lane**
**London WC2A 1HZ(GB)**

(54) **Treating aluminium workpieces.**

(57) A method of treating aluminium workpieces to improve their corrosion resistance comprises applying a coating of brazing flux, such as a potassium aluminium fluoride brazing flux, heating the coated workpiece in an inert atmosphere, and exposing the heated workpiece to an oxidizing atmosphere at a temperature of from 520 to 630°C. Treatment may be continued for from 0.5 to 15 minutes. Treatment is preferably performed in conjunction with brazing, by exposing the workpiece to e.g. atmosphere on the cooling side of the brazing cycle.

EP 0 347 106 A1

## TREATING ALUMINIUM WORKPIECES

This invention is concerned with the treatment of aluminium workpieces. One advantage which can be gained by the treatment is improved corrosion resistance, a matter of importance e.g. in heat exchangers such as radiators. The treatment involves heating and can conviently be performed in conjuction with brazing. Another advantage is the elimination of odour sometimes observed during brazing with halide fluxes. The invention also extends to aluminium workpieces carrying a corrosion resistant surface layer resulting from the treatment.

When an aluminium workpiece is to be joined to another workpiece (generally, but not necessarily of aluminium) by means of a brazing alloy, a flux is used to remove any oxide film on the surfaces to be joined. Brazing of aluminium can be performed in air, but a large amount of flux is required, and the strength of the brazed joints may be poor, particularly where the atmosphere is humid. For these reasons, brazing of aluminium is nowadays normally performed in an inert atmosphere. Inert gas brazing reduces the flux levels required to achieve a successful braze, sometimes by as much as thirty times. Furthermore, at any flux loading, the quality of the braze is improved when the braze is made in an inert atmosphere. Thus for example in the Nocolok brazing systems supplied by ourselves, which involve the use of a potassium/aluminium fluoride brazing flux, users are recommended to perform furnace brazing in an inert atmosphere.,

One use of our Nocolok brazing system is described in Britisch patent specification 1542323. In Example 3, the unit was allowed to cool to 550°C before removal from the brazing furnace, and was thereafter cooled in air. This practice involves exposure of the workpiece to air at elevated temperature, but, it is believed, for such a short time that the particular advantages resulting from the method of this invention are not achieved.

This invention results in part from the unexpected observation that the resistance to corrosion of an aluminium workpiece can be dramatically improved by exposing the workpiece, carrying a coating of a halide salt of an alkali metal and at elevated temperature, to an oxidizing atmosphere for a suitable length of time. What constitutes a suitable length of time is determined by various factors: the shape and complexity of the workpiece; the nature and amount of halide salt on the surface of the workpiece; the temperature of the workpiece; the nature and concentration of the oxidant in the oxidizing atmosphere; and the rate of exposure of workpiece to oxidant. These factors will be discussed below. It appears that exposure of the heated workpiece to the oxidizing atmosphere results in the formation of a corrosion-resistant protective surface layer.

Under certain circumstances, freshly brazed aluminium workpieces emit an unpleasant odour similar to that of rotten eggs. The cause of this odour is believed to be the toxic gas hydrogen sulphide, generated from sulphur-containing impurities in the metal of the workpiece or brazing flux. This invention also arises from the observation that exposure of the heated workpiece to the oxidizing atmosphere results in brazements having no unpleasant odour, presumably as a result of oxidation of the hydrogen sulphide.

In one aspect, the invention provides a method of treating an aluminium workpiece which method comprises applying a coating comprising alkali metal and halogen values to the surface thereof, heating the coated workpiece in an inert atmosphere, bringing the heated workpiece into contact with an oxidizing atmosphere, maintaining the coated workpiece in contact with the oxidizing atmosphere at a temperature of at least the lower of 550°C and 95% of the solidus temperature of the coating expressed in °K, provided that when the coating consists of potassium/aluminium fluorides the temperature is at least 550°C, and cooling the workpiece to ambient temperature.

This treatment results in an aluminium workpiece carrying a corrosion resistant surface layer comprising at least one complex of K with Al, O and F, which surface layer has an X-ray diffraction pattern including a line at 6.8 ±0.1 Angstroms (due to the sum of the unresolvable lines at 6.75 and 6.85 Angstroms whose relative intensities vary according to the processing conditions) and an F/O intensity ratio of from 1 - 14 as measured by X-ray fluorescence.

The term aluminium is intended to cover, not only the pure metal, but also alloys containing a major proportion of aluminium. The term aluminium workpiece is intended to cover workpieces of aluminium and its alloys, and aluminium workpieces whose surfaces have been plated with zinc, nickel, or other metal, and then heat treated at some stage during working to cause the metal on the surface to diffuse into the substrate of aluminium metal or alloy, and aluminized substrates such as steel which are covered with a layer of aluminium. As reported below, we have obtained good results on a wide range of commercial aluminium alloys. The method is of particular interest in relation to brazing sheet, that is to say a sheet of an aluminium alloy having a relatively higher solidus coated with a layer of a brazing alloys having a relatively lower solidus. Examples of suitable aluminium alloys include AA3003, 3003 bearing a diffused Zn layer, 4343, 4045, 4045 plus 1% Zn, 1050, 1050 bearing a diffused Zn layer, 7072, 9042, and AA No. 11, 12 and 13 brazing sheet.

Although the shape of the workpiece is not critical, the invention is of particular advantage in relation to workpieces of somewhat complex shape that are formed by brazing and in which corrosion resistance is otherwise somewhat difficult to achieve. Heat exchangers are of particular interest in this context.

Although we have tested and generally achieved good results with fluoride, chloride and iodide salts as coating, it is generally more convenient to use a fluoride or chloride. It is particularly preferred to use complex potassium/aluminium fluorides such as those sold by us under the Trade Mark Nocolok. As described in USP 3951328, these are typically $KAlF_4$ or mixtures thereof with one or both of $K_3AlF_6$ and anhydrous $K_2AlF_5$ or $K_2AlF_5.H_2O$. However, the effect on which this invention is based is not confined to Nocolok fluxes, but is also observed when other commercially available halide brazing fluxes are used. The effect is also enhanced when additives, such as alkali and alkaline earth salts are added to the flux. Such a flux containing LiF as the second alkali is described in EP 0091231. The presence of 2 to 7% LiF and 53 to 62% $AlF_3$ and 35 to 44% KF inherently depresses the solidus temperature to between 490 and 560°C. Another flux containing two alkali metals is described in US 4670067, where the second alkali metal is present as CsF. It teaches that a composition of 62 mole % KF, from 2 to 74 mole % CsF, and 26 to 67% $AlF_3$ has a solidus temperature between 440 and 580°C. This composition can be expressed in weight % as 18 to 59% KF, 5 to 55% CsF, and 27 to 36% $AlF_3$. It is of course necessary that a brazing flux be molten at the brazing temperature. Although this invention is not limited to brazing, it is nevertheless preferred that the aluminium workpiece be heated to a temperature at which the halide salt is melted prior to or during exposure of the workpiece to the oxidizing atmosphere.

The amount of coating used should generally be in the range of 3 to 250 grams, preferably 5 to 50 grams, per square metre of workpiece surface. Although these ranges are not critical, the beneficial effects are less apparent at application rates below $3g/m^2$. These rates are broadly in line with conventional rates for application of halide brazing fluxes. It appears that the salt requirements for corrosion protection and odour elimination according to this invention, and the flux requirements for brazing, are often of the same order.

The coating may be applied in conventional manner, either by dipping the workpiece in a solution or suspension, or by spraying or otherwise applying a solution or suspension of the salt on the workpiece surface. It may be useful to apply the halide salt to the metal workpiece after it has been heated.

The coated workpiece is heated under an inert atmosphere. The use of argon or nitrogen is preferred, but other inert gases provide acceptable alternatives. The atmosphere should preferably contain less than 1000 ppm free or combined oxygen (e.g. as air or water vapour). It may be advantageous to heat the workpiece under a reduced pressure and this may facilitate the subsequent introduction of an oxidizing atmosphere.

The heated workpiece is then brought into contact with an oxidizing atmosphere, most conveniently air. It may be preferred to use dry air, although the presence of minor amounts of moisture does not appear to have any harmful effect. In order to achieve greater control or special effects, other oxidizing atmospheres may be used, including but not limited to oxygen, carbon dioxide, carbon monoxide, sulphur dioxide, nitrogen oxides and ethylene oxide. The concentration of free or combined oxygen is preferably at least 0.5%, but may be 9% or higher e.g. up to 40%. The use of carbon-containing oxidants is advantageous in that the resulting protective layer formed on the surface of the workpiece may contain carbon and be coloured black.

Preferably, exposure of the workpiece to the oxidizing atmosphere is effected in a controlled manner, preferably within a furnace e.g. a brazing furnace. Rather than simply use an oxidizing atmosphere to flush an inert atmosphere from the furnace, there may be advantage in taking positive steps to bring the oxidizing atmosphere into contact with the workpiece. These steps may include heating the workpiece under vacuum; or alternatively directing the oxidizing atmosphere at the workpiece by means of pumps or jets.

On being exposed to the oxidizing atmosphere, the workpiece typically undergoes a rise in temperature, resulting from exothermic reaction involving the coating, the metal substrate, and the oxidizing atmosphere, often of the order of 5 to 20°C or even higher. The extent of this rise can be controlled by controlling the rate and extent of the introduction of oxidant. The coated workpiece is maintained in contact with the oxidizing atmosphere at a temperature of at least the lower of 550°C and 95% of the solidus temperature of the coating expressed in °K, provided that when the coating consists of potassium/aluminium fluorides the temperature is at least 550°C. The temperature of the workpiece just prior to the introduction of oxidant may be a little lower than this, so that the heating effect of the oxidant brings the workpiece into the desired temperature range. When the coating has a solidus temperature of at least 560°C, the treatment

3

temperature is preferably at least 550°C. When the coating has a solidus temperature below 560°C, the treatment temperature is preferably at least 520°. In general, the oxidizing treatment is more effective at temperatures at which the coating is permeable enough to permit diffusion of oxidant, e.g. at least 95% of the solidus temperature of the coating expressed in degrees Kelvin. (For example, 560°C is 833°K, of which 95% is 791°K or 518°C.)

Manifestly, the temperature of the workpiece prior to the introduction of oxidant should not be so high that the solidus temperature of the workpiece, or any part of it other than e.g. the cladding alloy of brazing sheet, is ever reached. It is however preferred that the local temperature at the surface of the workpiece be sufficiently high that the coating, e.g. brazing flux, is melted and able to flow to provide uniform protection over the entire surface.

The workpiece is maintained in contact with the oxidizing atmosphere for a time sufficient to achieve the desired objective, which may be an improvement in corrosion resistance and/or reduction in odour. The time required for this varies with temperature, even normal cooling rates provide some protection, but is generally at least 15 seconds and preferably 30 seconds to 2 mins, although longer times up to e.g. 15 mins are not harmful. On heating coated workpieces for excessively long periods, e.g. in excess of 30 minutes, in oxidizing atmosphere, the improved corrosion resistance properties are reduced and eventually disappear. With workpieces of complex shape, it needs to be borne in mind that the oxidizing atmosphere may take some time to reach the innermost recesses.

As noted above, the method of this invention may conveniently be performed in conjuction with brazing, in which case the coating may conveniently be a brazing flux. In these circumstances it is preferred that the workpiece be heated to brazing temperature and maintained at that temperature for a time sufficient to effect brazing, under an inert atmosphere. The oxidising atmosphere is introduced after brazing has been completed, either at the brazing temperature, or more preferably at a somewhat lower temperature such that the workpiece is maintained at a temperature in the range 520°C or 550°C to the lower of the solidus temperature of the alloys in the workpiece being processed, and 630°C, since superior corrosion resistant properties can be obtained at temperatures in this range. The simple expedient of removing the brazed workpiece from the brazing furnace and allowing it to cool in ambient air is not normally effective. It is generally necessary, either to use an atmosphere containing a higher concentration of oxidant, or to increase contact between the atmosphere and workpiece beyond what would be achieved by simple convection, or to hold the elevated temperature for longer than would be the case during normal air cooling.

Finally the workpiece is cooled to ambient temperature under conditions which are not critical. For example, the workpiece may be removed from the brazing or other furnace and allowed to cool in ambient air.

As a result of this treatment, a protective layer is formed on the surface of the aluminium workpiece. The thickness of the layer depends on the loading of the alkali metal/halogen coating and on the conditions of exposure to the oxidizing atmosphere, but is generally at least two microns and typically in the range 2 to 200 microns. When the coating is a potassium/aluminium fluoride, the film is formed of at least one complex of K with Al, O and F, in which the O:F atomic ratio is typically from 1:0.5 to 1:2, for which many formulae can be written, among the simplest example of these is $KAlOF_2$, but is not limited to this. The surface layer crystallises, according to X-ray diffraction analysis, in the hexagonal crystal system. The layer may consist of platelets in the form of hexagonal basal pinicoid crystals, which are from 2 to 8 microns in size. The preferred orientation of the crystals on the surface is generally such that the major X-ray diffraction intensity is generated by the OOX plane.

The protective layer generally completely covers the surface of the workpiece without showing any underlying aluminium. In any particular view, however, while the entire surface is covered with the protective layer, a few, or many hexagonal basal pinicoid crystals may be seen. In contrast, the surface of a workpiece that has been brazed in an inert atmosphere using a halide flux such as Nocolok, appears partially covered with tetragonal or square platelets with frequent showings of underlying metal. Furthermore, the surface of a workpiece that has been brazed without a flux (as by vacuum brazing) shows no residue at all.

The complexes exist in one or more forms, which give X-ray diffraction patterns. One form gives characteristic lines predominately at 6.8, 4.52, 3.38, 2.70, 2.255, 1.92 and 1.69 Angstroms, although other secondary lines may be observed; while a second form has a characteristic line at 3.25 Angstroms. The intensity of these lines varies with changes in the substrate and in the orientation of the cyrstals. Due to the preferred orientation, the lines of the OOX plane predominate, and those from other planes may be - weak or absent.

The oxygen content of the surface layer is typically from 30 to 50 atomic percent as determined by Scanning Auger microprobe, the other constituents being K, Al and F; by contrast, the oxygen content of a nonoxidized Nocolok brazing flux is less than 15 atomic percent. The ratio of fluorine to oxygen intensities, as determined by X-ray fluorescence in the product, typically ranges from 1 to 14, most usually 1 to 5; by contrast, the fluorine: oxygen ratio in an unreacted surface is generally greater than 20 and may be several hunderd.

The improved corrosion properties are demonstrated in the Examples below.

As regards odour reduction, although this invention is concerned with results and not theories, it is currently believed that the following may explain the observed phenomena.

When no oxygen is present in the furnace atmosphere:

$$3 SO_4 \text{ (in the flux)} + 10 Al \rightarrow Al_2S_3 + 4 Al_2O_3 \qquad (1)$$

When a brazed unit is taken out of the furnace and is exposed to atmospheric moisture, the water reacts with the aluminium sulphide forming hydrogen sulphide, the "rotten eggs" odour.

$$Al_2S_3 + 6 H_2O \rightarrow 3 H_2S + 2 Al(OH)_3 \qquad (2)$$

On the other hand, when oxygen is introduced into the process, the following reaction occurs:

$$Al_2S_3 + 6O_2 \rightarrow Al_2(SO_4)_3 \qquad (3)$$

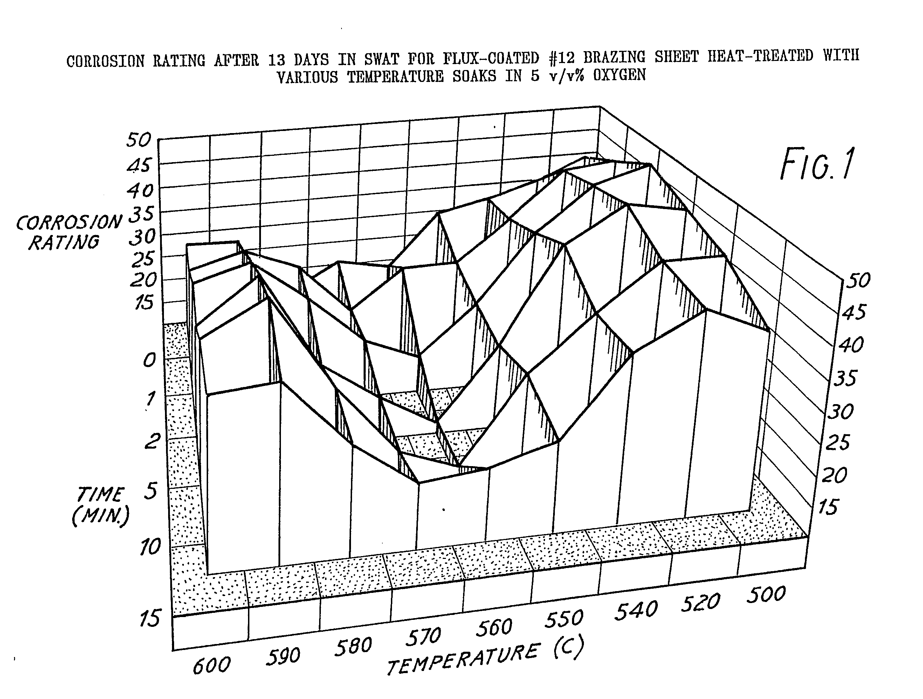

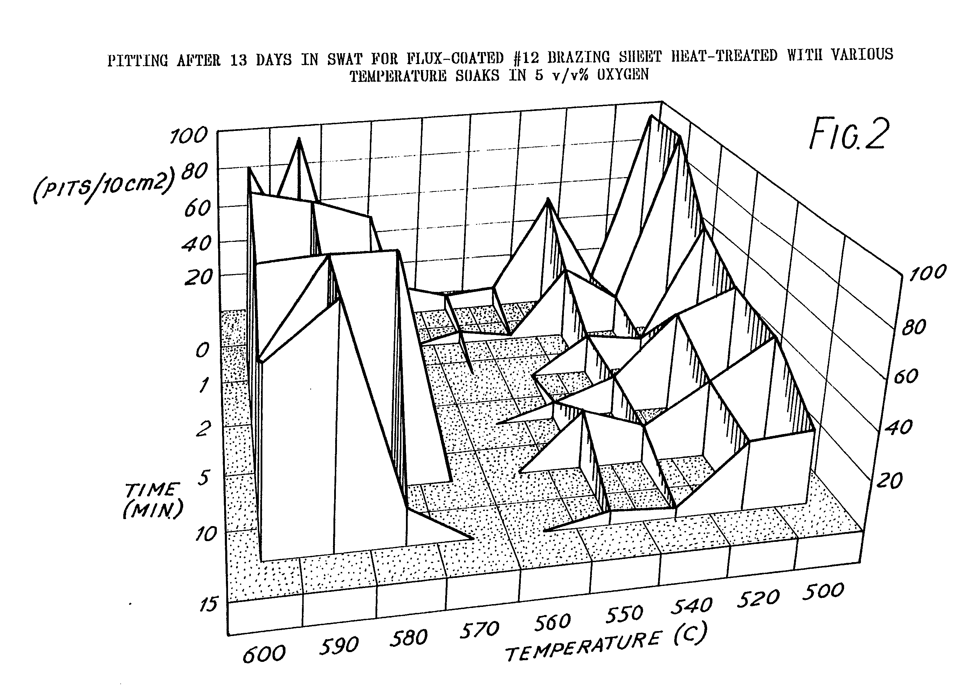

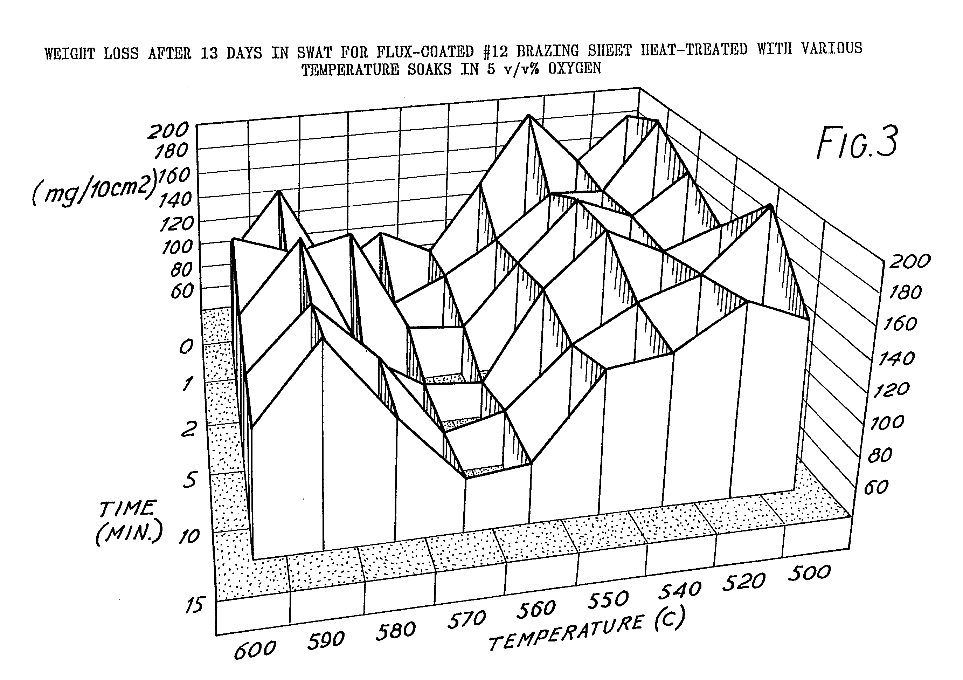

In the accompanying drawings, each of Figures 1 to 5 is a computer-generated representation of corrosion results obtained from numerous tests reported in Example 2.

In the examples which follow, corrosion resistance has been assessed by means of an acidified synthetic sea water (fog) test, the ASTM-G43 SWAT test. This involves placing samples to be tested in a salt spray chamber and subjecting them to 30-mintue spray followed by 90-minute soak at above 98% relative humidity. After a set time or number of (2-hour) cycles, corrosion is assessed by three tests:-

  i) Weight loss, expressed in mg per $10cm^2$ of workpiece surface; and

  ii) Pitting corrosion in terms of the number of pits per $10cm^2$ of workpiece surface.

  iii) Visual assessment on a scale from 0 (uncorroded) to 5 (severly pitted).

In most of the examples the workpieces used were rectangles of aluminium alloy sheet measuring 3 x 8cm or 3 x 10cm. With these samples, simple removal from the furnace and cooling in ambient air provided, in most cases, sufficient exposure to an oxidizing atmosphere to achieve the improved corrosion resistance which characterizes this invention. These samples can thus be used with a very simple cooling schedule to illustrate the invention. But with more complicated workpieces, simple cooling in air is not enough. In Examples 7 and 8, performed with small radiator units, a more complex schedule was required.

The following examples illustrate the invention.

## EXAMPLE 1

Potassium, aluminium fluoride flux was applied to AA No. 12 brazing sheet from a 15% w/v aqueous slurry at ambient temperature to give a deposit of 8.9 $g/m^2$. The sheet was dried at 250°C in air for 3 to 5 minutes.

Samples with and without flux were treated to the following heating cycle:-

  a) Introduce sample into furnace at 400°C (air/argon); purge the furnace with argon; increase the temperature to 610°C in 15 minutes.

  b) Maintain the temperature at 610°C for 15 minutes in argon.

  c) Spontaneously cool the sample to ambient temperature in laboratory air.

Control tests were done in which samples were cooled in step c) to ambient temperature in argon instead of air. The samples were subjected to SWAT testing, and results are set out in the following Table 1.

TABLE 1

| Sample Fluxed? | Air in Step C? | 120 hours (pits/10cm$^2$) | 240 hours (Pits/10cm$^2$) |
|---|---|---|---|
| No | No | 21 | 58 |
| No | Yes | 11 | 56 |
| Yes | No | 15 | >170 |
| Yes | Yes | 0 | 31 |

In other tests, the holding temperature in step b) (the post-brazing temperature) was varied between 580°C and 620°C, with essentially the same results.

## EXAMPLE 2

Brazing and post-brazing simulations were carried out in a Linderg heavy duty brazing furnace. The test samples were 3.16 cm o/d discs of AA No. 12 brazing sheet and AA 3003 alloy coated with 9 to 11 g/m$^2$ potassium/aluminium fluoride flux. The fluxed specimens were heated to 605°C in static 10 psig argon. At the desired temperature, on the cooling side of the brazing cycle, the argon pressure was adjusted to 1 psig, then dry air was introduced into the furnace until a total pressure of 6 psig was attained giving an oxygen partial pressure of 5 mol % in the furnace. These conditions were maintained for 0 to 15 minutes at selected constant temperatures ranging from 400°C to 600°C.

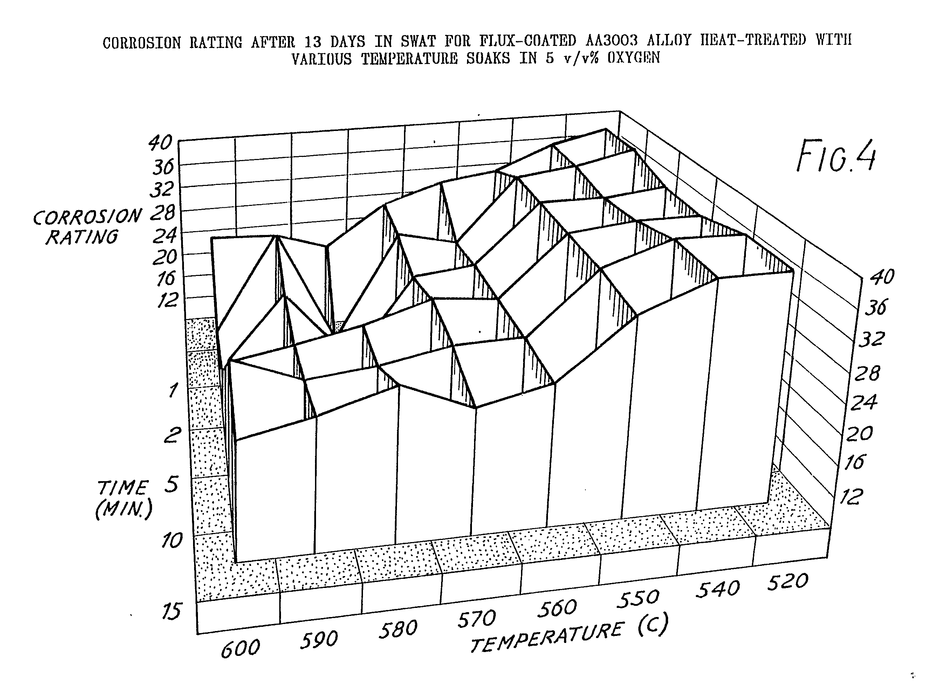

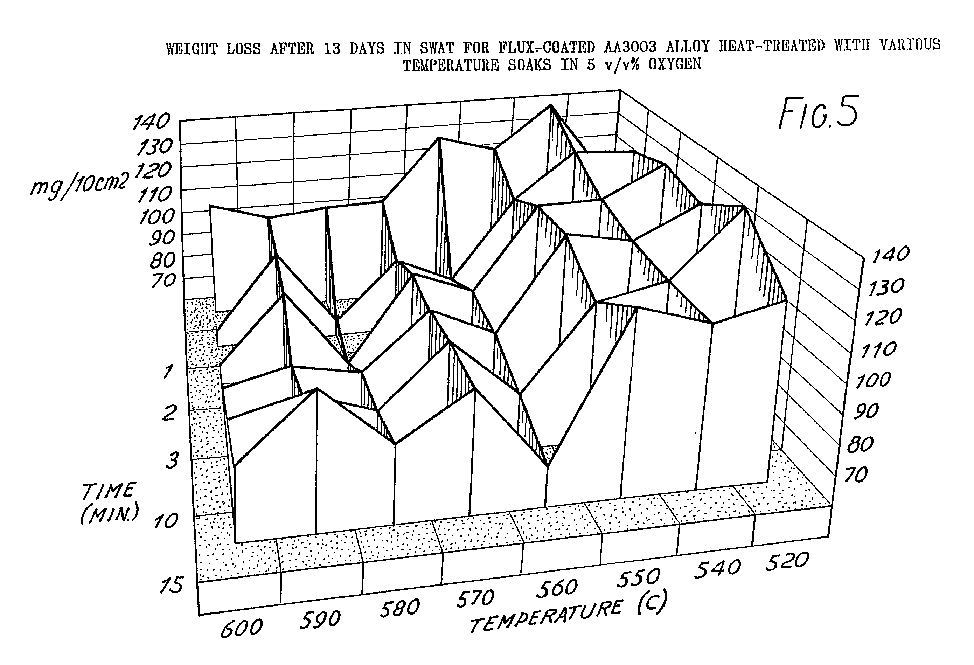

The samples were tested in the SWAT cabinet for 13 days and evaluated for corrosion, pitting and weight loss. Results are presented in graphic form in Figures 1, 2 and 3 for AA No. 12 brazing sheet and Figures 4 and 5 for AA 3003 alloy. The corrosion ratings in Figures 1 and 4 are the sums of the daily ratings on each of the 13 days of the tests. Unlike AA No. 12 brazing sheet, AA 3003 alloy does not make pits when exposed to a corrosive atmosphere.

## EXAMPLE 3

Samples of AA No 12 brazing sheet were dipped in 15% slurries of various halide brazing fluxes, to provide a flux deposit in an amount of about 5g/m$^2$. The fluxed samples were subjected to the following heating cycle:-

a) 100°C to 555°C in argon 4l/min. Then 550°C to 595°C in argon, 0.5l/min.
b) 595°C to 610°C in ambient air, 1l/min and argon, 0.5l/min.
c) Quenched to 300°C in ambient air 1l/min and argon 0.5l/min.

The treated samples were subjected to the SWAT test. Six different halide fluxes, including two commercially sold products, were tested and compared against unfluxed samples. The composition of the fluxes and experimental results are shown in Table 2. In all cases, substantial improvements in corrosion resistance were observed as measured in pit counts after 240 hours in SWAT.

## TABLE 2

| NAME OF COATING | COMMERCIAL EXPERIMENTAL | CONSTITUENTS | CORROSION RATING | |
|---|---|---|---|---|
| | | | Pits/10 cm² After 240 hours SWAT | |
| | | | Without Oxidising Treatment (Control) | With Oxidising Treatment |
| SK-2B | Experimental | $KF$, $KBF_4$ $(NH_4)_2SiF_6$ $LiCl$ | 33 | 29 |
| SK-2BM | Experimental | $KF$, $KBF_4$ $(NH_4)_2SiF_6$ $LiCl$, $LiF$ | 21 | 8 |
| SK-4M | Experimental | $KF$, $(NH_4)_2SiF_6$ $BeF_6$ | | 41 |
| NL | Experimental | $K_3AlF_6$ $KAlF_4$ $Li_3AlF_6$ | 27 | 1 |
| Firint Platre | Commercial | $NaCl$, $KCl$, $LiF$ $K_2ZnCl_4$, $NH_4Cl$ | 37 | 18 |
| No. 251 | | $K_2NaAlF_6$ | 36 | 8 |
| Nocolok | Commerecial | $KAlF_4$ $K_2AlF_5.H_2O$ | 36 | 8 |
| No Flux (Control) | | | 130 | 129 |

## EXAMPLE 4

The experimental conditions generally as described in Example 3 were used to evaluate various experimental coatings. Details and corrosion ratings, in terms of pits/10 cm² after 120 SWAT cycles, are set out in the following Table 3. The last six rows of the table show the effect of including additives in potassium fluoaluminate flux, in all cases in an amount of 4.8% of the flux.

TABLE 3

| COATING | TEMPERATURE °C | | CORROSION RATING | |
|---|---|---|---|---|
| | | | PITS/10cm² AFTER 240 HRS | |
| | INITIAL HEATING | OXIDIZING TREATMENT | OXIDIZING TREATMENT | NO TREATMENT (CONTROL) |
| Br | 590 | 590-610 | 267 | -- |
| KBr + AlF₃ (1:1) | 590 | 590-610 | 130 | -- |
| KI | 590 | 590-610 | 270 | -- |
| KI + AlF3 (1:1) | 590 | 590-610 | 0 | -- |
| AlF₃ | 610-630 | 600 | 71 | 86 |
| KCl + AlF₃ (1:2) | 620 | 600 | 35 | 78 |
| KF | 620 | 600 | 18 | 106 |
| KCl + KF (4.5:1) | 620 | 600 | 28 | 73 |
| POTASSIUM FLUOALUMINATE + LiCl | 610 | 610 | 26 | 75* |
| POTASSIUM FLUOALUMINATE + LiF | 610 | 610 | 6 | 50* |
| POTASSIUM FLUOALUMINATE + CaCl₂ | 610 | 610 | 8 | 90* |
| POTASSIUM FLUOALUMINATE + CaF₂ | 610 | 610 | 65 | 160* |
| POTASSIUM FLUOALUMINATE + ZnCl₂ | 610 | 610 | 50 | 115* |
| POTASSIUM FLUOALUMINATE | 610 | 610 | 53 | 170* |

* RATING AFTER 120 HOURS, AFTER 240 HOURS, ALL SAMPLES WERE SEVERELY PITTED

## EXAMPLE 5

To show the effect of strontium salts, various strontium salts were added at 5 parts strontium salt to 95 parts potassium fluoraluminate flux, and the mixture dispersed in acetone to give a 12% w/v slurry. This slurry was sprayed on samples of AA No. 12 brazing sheet, and then dried by heating the sprayed sheet at 200°C for 3 to 5 minutes to give a deposit between 16 and 23 $g/m^2$.

The samples were treated as follows:

a) introduce sample into furnace at 400°C (air/argon atmosphere); purge the furnace with argon, increase the temperature to 610°C in 15 minutes;

b) maintain the temperature at 610°C for 15 minutes in argon;

c) introduce dry air into the furnace, and allow the temperature to drop from 610°C to ambient in 7 minutes.

Control tests were done in which no additive was added to the flux.

The samples were then subjected to SWAT testing for a total of 482 hours. The results, expressed as number of pits/10 cm² are given in the table below. These are the average results of two individual tests.

| Additive | Flux Load $g/m^2$ | Corrosion Rating |
|---|---|---|
| | | Pits/10 cm² After 482 Hours |
| None | 23 | 20 |
| Sr(NO₃)₂ | 20.5 | 3 |
| SrCO₃ | 17 | 8 |
| SrO₂ | 19 | 10 |
| SrF₂ | 19.5 | 97 |

## EXAMPLE 6

This Example demonstrates the effect of the invention on various different aluminium alloys. Samples of the various alloys were treated with potassium/aluminium fluoride flux at a rate of $8.9g/m^2$ and subjected to the following heating cycle:-

a) 400°C to 600°C in 10 minutes in argon.

b) Two minutes at 600°C in argon.

c) Quickly taken out of furnace and cooled to 200°C in ambient air.

Control samples were left unfluxed; some were, and some were not, subjected to the heating cycle. The treated samples were subjected to SWAT testing. The following results, obtained on AA No 13 brazing sheet are representative.

| Fluxed? | Heating Cycle? | Weight Loss after 240 hours ($mg/10cm^2$) | Pits/$10cm^2$ after 240 hours |
|---|---|---|---|
| Yes | Yes | 64 | 0 |
| Yes | Yes | 53 | 0 |
| No | Yes | 114 | 78 |
| No | No | 125 | 120 |

Essentially similar results were obtained on the following aluminium alloys: AA-1100; AA-7072; AA-6009; AA-6010; AA-2036; AA-4047·3005. In some cases the post-brazing temperature b) was 570°C or 550°C as appropriate.

The treatment of the invention invariably enhanced the resistance to pitting corrosion of all the alloys tested. In terms of weight loss, the enhancement was also significant in most cases.

## EXAMPLE 7

Preliminary runs were carried out to establish the best conditions for testing small radiators which, because of their more complex shape than test coupons, require different furnace stacking arrangements and air flow pattern particularly to ensure efficient flux/air contact during the post-brazing step.

Small radiator units comprising a tube of 4343/3003 alloy, and either a non-sacrificial fin of 3003 or a sacrificial fin of 3003 + 1.27% zinc, were used. These were dipped in a 15% slurry of potassium/aluminium fluoride flux and picked up flux at a level of $9.8g/m^2$. The fluxed units were heated in a furnace of 5l capacity. Two heating sequences were used:-

A. Brazing in argon only.

a) 100°C to 550°C in argon (3.5 minutes);

b) 550°C to 610°C in argon (2 minutes);

c) To 300°C in argon (3.5 minutes).

B. Brazing in argon, post-brazing in ambient air.

a) 100°C to 550°C in argon (3.5 minutes);

b) 550°C to 595°C in argon (1 minute); 595°C to 610°C in ambient air 1l/min, argon 0.5l/min (20s);

c) To 300°C in ambient air 1l/min, argon 0.5l/min (2.8 minutes).

The following results were obtained.

9

TABLE 4

| Fins, Sacrificial? | Heating Cycle | Weight Loss (%) after 192 hours in SWAT | Pits/10cm$^2$ on Tube ater 192 hours in SWAT |
|---|---|---|---|
| No | A | 10.6 | 135 |
| No | B | 4.2 | 4 |
| Yes | A | 10.4 | 230 |
| Yes | B | 4.7 | 0 |

Excellent resistance to corrosion was achieved using both sacrificial and non-sacrificial fins.

Here is a preferred cycle for brazing and post-brazing treatment for these small radiator units using a batch brazing furnace:

Purging

Purge system with inert gas (argon, nitrogen preferred) as normally done for standard brazing practice. Temperature not exceeding 400°C (preferred 200 - 300°C) and positive pressure inside furnace (preferred 1 to 5 psig above atmospheric pressure). Time is not critical.

Heating and Brazing of Assembly

Heat workpiece in inert atmosphere (argon, nitrogen preferred) to high enough temperature so that complete brazing can take place (preferred temperature 590 - 605°C, heating rate around 15 C°/min, pressure 1 - 5 psig).

Pressure prior to Post-Brazing

Adjust pressure inside brazing furnace just before completion of brazing (preferred 1 psig above atmospheric pressure).

Post-Brazing Redox Treatment

Introduce oxidizing gas (oxygen, air, carbon dioxide....) up to a pressure of 5 to 10 psig (preferred time 15 - 60 seconds, oxidizing gas ambient or dry air). This may be done while workpiece is still at brazing temperature, but for best results workpiece is not above 570°C.

Hold at Brazing Temperature

Sample may be held at elevated temperature (500 -620°C with 550-570°C preferred) in order to get a more complete reaction between Aluminium/flux/oxygen system. (Preferred time 30 - 300 seconds).

Cooling

Rapid cooling in an oxidizing medium and positive pressure is preferred.

Note:

For a tunnel type of furnce a gas flow system can be used instead of a "gas pressure technique" for introducing the oxidizing gas at the point in the furnace where the brazing step is just completed. In that instance only the time and temperature frames described above should be used.

## EXAMPLE 8

For this experiment there were used serpentine condensers consisting of:

| Fins | - | AA 3003 clad both sides with AA 4045 |
| Tubes | - | AA 1050 extrusions |

In some cases as shown in the Table below, components included diffused or deposited zinc or were given a commercial chromate treatment. A potassium fluoaluminate flux slurry was sprayed on to give flux loadings in the range 5-15 g/m$^2$. Different conditions were used on different sections of each radiator. The units were furnace brazed at about 600°C. When the temperature had been adjusted to 580°C after brazing, ultra-dry air was admitted to the furnace until the oxygen content reached 8%, or, for the control tests, the nitrogen atmosphere was maintained. After cooling, the radiators were subjected to SWAT testing for 236 or 472 hours with the results set out in the Table 5.

## EXAMPLE 5

| PLAIN, DIFFUSED Zn PROTECTED AND CHROMATED PROTECTED RADIATORS MADE FROM AA1050 AND AA3003 CLAD WITH 4045 ALLOYS | | | | | | | | | |
|---|---|---|---|---|---|---|---|---|---|
| ALLOY | TUBE TREATMENT | ALLOY | FIN TREATMENT | FLUX g/m² | CONDITION | CORROSION AFTER SWAT | | | |
| | | | | | | TUBE HOURS | | FIN HOURS | |
| | | | | | | 236 | 472 | 236 | 472 |
| AA1050 | | 3003 + 4045 | | 5 | CONTROL | L | L | 2 | 4 |
| AA1050 | | 3003 + 4045 | | 8 | AIR | O | L | 1 | 1 |
| AA1050 | + DIFFUSED Zn | 3003 + 4045 | + DIFFUSED Zn | 7 | CONTROL | O | O | 2 | 4 |
| AA1050 | + DIFFUSED Zn | 3003 + 4045 | + DIFFUSED Zn | 9 | AIR | O | O | 1 | 2 |
| A1050 | CHROMATED | 3003 + 4045 | CHROMATED | 11 | CONTROL | L | L | 1 | 1 |
| AA1050 | CHROMATED | 3003 + 4045 | CHROMATED | 12 | AIR | O | L | 1 | 1 |
| AA1050 | | 3003 + 4045 | + 1% Zn | 10 | CONTROL | L | L | 4 | 4 |
| AA1050 | | 3003 + 4045 | + 1% Zn | 15 | AIR | L | L | 1 | 1 |

FOR TUBES:

O = NO LEAKS

L = LEAKED

FOR FINS:

1 = NO CORROSION

3 = SEVERELY PITTED BUT STURDY

5 = COMPLETELY DISINTEGRATED

EXAMPLE 9

AA No 12 Brazing sheet was coated with 28.5g/m² of the potassium/aluminium fluoride brazing flux, and was heated to 590°C in argon. At 590°C, 10 psig of carbon dioxide was introduced into the brazing furnace.

The sample was cooled to ambient temperature and subjected to SWAT testing. There were 45 pits/10cm² on the black surface after 120 SWAT cycles.

A good adherent and coherent black layer was obtained on the brazing sheet after treatment. About 80% of the surface was still black after the 120 SWAT cycles.

Other tests showed that the black layer was obtained using flux in amounts from 4 - 24 g/m² and an atmosphere containing 3 - 35% of carbon dioxide.

EXAMPLE 10

AA No. 12 brazing sheet was coated with potassium fluoaluminate brazing flux and heated in argon in a furnace. At about 600°C an oxidant gas was introduced. The samples were subjected to SWAT testing and corrosion checked after 120 2-hour cycles. Results of various experiments including some controls are set out in the following Table 6.

TABLE 6

| SUMMARY OF DATA ON DIFFERENT OXIDANTS | | | | | | | | | |
|---|---|---|---|---|---|---|---|---|---|
| CONDITIONS | | | | | | | | | |
| Flux load, g/m² | 8.9 | ~ 9 | ~ 9 | 8.9 | 0 | ~ 9 | 0 | 10 | 10 |
| Purge gas | Argon | Argon | Argon | Argon | Argon | Argon | Argon | Argon | Argon |
| Oxidant Gas | Nitrous Oxide | CO₂ 99.5% | SO₂ | Argon | Argon | Air | Air | H₂O | Argon |
| Oxidant Introduced at °C | 590-610 | 590-610 | 590-610 | 600 | 600 | 600 | 600 | 600 | 610 |
| Flow Rate Oxidant L Min | 1 | 1 | 1 | 0.2 | 0.2 | 0.2 | 0.2 | 6 | 1 |
| Removal from furnace °C | 200 | 200 | 200 | 200 | 200 | 200 | 200 | 350 | 350 |
| Dwell at peak temp, min | ~ 1 | ~ 1 | ~ 1 | 1 | 1 | 1 | 1 | ~ 1 | ~ 1 |
| RESULTS | | | | | | | | | |
| No of Swat cycles | 120 | 120 | 120 | 120 | 120 | 120 | 120 | 120 | 120 |
| Corrosion Resistance: | | | | | | | | | |
| Avg. No. of Pitts/10cm² | 6 | 10 | 9 | 36 | 140 | 7 | 94 | 9 | 133 |

A similar experiment showed that the use of oxygen as the oxidant gas at a partial pressue of 7 - 8% resulted in substantially complete elimination of pitting corrosion after 240 hours of SWAT testing.

## EXAMPLE 11

Some AA No 12 brazing alloy samples, coated with various amounts of potassium/aluminium fluoride flux, were heat-treated as follows:-

a) 200°C to 590°C in argon in 2.8 minutes.

b) 590°C to 610°C in dry air in 0.6 minutes.

c) 610°C to 350°C in dry air in 3.3 minutes.

Then 350°C to 25°C in ambient air.

The protective coating thickness after treatment and the pitting after 480 hours in the SWAT test were evaluated for each for the following flux loadings.

TABLE 7

| Amount of Flux (g/m²) | Pits/10cm² | Coating Thickness (microns) |
|---|---|---|
| 2.8 | 34 | 2 to 5 |
| 3.7 | 2.2 | 2 to 10 |
| 6.3 | 1.0 | 3 to 12 |
| 13 | 2.2 | 3 to 23 |
| 30 | 0.0 | 6 to 50 |
| 32 | 0.0 | 6 to 56 |
| 51 | 0.0 | 9 to 90 |
| 77 | 0.0 | 13 to 135 |
| 250 | 0.0 | 19 to 150 |

The use of 8 mol % oxygen in place of dry air gave essentially the same results.

## EXAMPLE 12

This Example reports X-ray diffraction (XRD) and X-ray fluorescence (XRF) data on the surface layer. Specimens of No. 12 brazing sheet or AA 3003 sheet were coated with potassium fluoaluminate flux. After purging the system for one hour with 4 l/min nitrogen at 200°C, the samples were heated to 605°C in the nitrogen atmosphere. This caused surface melting of the brazing sheet. Subsequent treatments are set out in the following Table 8.

TABLE 8

| SAMPLE PREPARATION AND CONDITIONS FOR POST-BRAZING TREATMENTS | | | | | |
|---|---|---|---|---|---|
| TEST | MATERIAL | FLUX LOAD $(g/m^2)$ | POST BRAZING CONDITIONS | | |
| | | | ATMOSPHERE | TEMP. (°C) | TIME (min) |
| A | AA NO.12 SHEET | 7.8 | NITROGEN | -- | 0 |
| B | AA NO.12 SHEET | 10.7 | 24 v/v% DRY AIR | 565 | 2 |
| C | AA NO.12 SHEET | 10.5 | 24 v/v% $CO_2$ | 565 | 2 |
| D | AA 3003 | 9.9 | NITROGEN | -- | 0 |
| E | AA 3003 | 10.9 | 24 v/v% DRY AIR | 565 | 2 |
| F | AA 3003 | 8.2 | 24 v/v% $CO_2$ | 565 | 2 |

Surface analysis by XRD was performed using a Philips diffractometer using CuK alpha radiation set to 40 KV, 20 mA, 2°/min and time constant of 2 sec. The XRD intensities of various species, expressed in kilocounts per second, are set out in the following Table 9.

TABLE 9

| SUMMARY OF XRD DATA | | | | |
|---|---|---|---|---|
| | | XRD PEAK INTENSITY (kcps) | | |
| TEST | SUBSTRATE | PHASE 6.8 (6.8±0.1A) | KAIF$_4$ (3.08A) | PHASE 3.25 (3.25 A) |
| A | AA No.12 SHEET | 0.0 | 5.2 | 0.00 |
| B | AA No.12 SHEET | 9.5 | 0.1 | 0.13 |
| C | AA No.12 SHEET | 1.5 | 0.0 | 0.02 |
| D | AA3003 | 0.0 | 168.0 | 0.00 |
| E | AA3003 | 55.2 | 6.7 | 0.09 |
| F | AA3003 | 8.4 | 0.1 | 0.08 |

Phase 6.8 is the main species generated by exposure of the sample to dry air, and to a lesser extent to carbon dioxide. Phase 3.25 is believed to be a minor by-product sometimes formed in conjuction with phase 6.8. The figures given in the Table are not necessarily proportional to the concentration of the species.

Elemental XRF surface analyses were caried out using a Rigaku model 3070 instrument set at 50 KV and 50 mA. The relative amounts, in kcps, for Al, F, $O_2$ and C detected on the surface of the substrates are compared in the following two Tables 10 and 11.

TABLE 10

| XRF SURFACE ANALYSIS OF AA NO. 12 BRAZING SHEET | | | |
|---|---|---|---|
| ALLOY | AA No. 12 BRAZING SHEET | | |
| TEST | A | B | C |
| POST-BRAZING CONDITIONS | NITROGEN NO SOAK | DRY AIR 565°C, 2 MIN | CARBON DIOXIDE 565°C, 2 min |
| ELEMENT | INTENSITY (kcps) | INTENSITY (kcps) | INTENSITY (kcps) |
| Al(K-BETA) | 17.70 | 9.90 | 7.70 |
| F | 10.90 | 20.60 | 16.40 |
| 02 | 0.25 | 3.40 | 3.88 |
| C | 0.03 | 0.01 | 0.32 |
| F/O RATIO | 43.6 | 6.1 | 4.2 |

TABLE 11

| XRF ANALYSIS OF AA 3003 SHEET | | | |
|---|---|---|---|
| ALLOY | AA 3003 SHEET | | |
| TEST | D | E | F |
| POST-BRAZING CONDITIONS | NITROGEN NO SOAK | DRY AIR 565°C, 2 MIN | CARBON DIOXIDE 565°C, 2 min |
| ELEMENT | INTENSITY (kcps) | INTENSITY (kcps) | INTENSITY (kcps) |
| Al(K-BETA) | 11.20 | 9.00 | 7.60 |
| F | 34.40 | 26.60 | 22.70 |
| 02 | 0.06 | 2.62 | 1.75 |
| C | 0.00 | 0.00 | 0.42 |
| F/O RATIO | 573.6 | 10.1 | 13.0 |

The oxidation treatment is seen to reduce the F/O ratio by a large factor. Although this ratio depends on various factors, it can be seen that surface layers according to this invention can be characterized by having an F/O intensity ratio of from 1 - 14 as measured by XRF under the defined conditions.

EXAMPLE 13

It is somewhat difficult to analyse the gase surrounding a brazed workpiece of complex shape, such as a heat exchanger. So initial experiments used instead a mixture of 2.5g of Al-9% Si alloy powder with 0.5g of a commercially available potassium/aluminium fluoride brazing flux. The mixture in a standard test cup of brazing sheet was placed in a furnace which was back filled with dry nitrogen and the power maintained until the temperature rose above 577°C at which point the flux was molten. At this point, the pressure of the furnace was reduced to 7 to 13 kPa by opening the vent valve on the furnace. Oxygen was then introduced into the furnace atmosphere until the pressure of the furnace returned to 35 kPa. The rate of introduction was controlled by a gas regulator on the air cyclinder. The introduction of oxygen involves a rise in temperature, and care was taken that the temperature of the sample did not go above 610°C. After the

sample had cooled to 500°C it was removed from the furnace.

The sample was then immediately placed in a gas washing bottle. Moist nitrogen was passed over it and then through a peroxide solution to convert hydrogen sulphide emanating from the flux into a sulphate. The results obtained were expressed as micrograms of sulphate in the peroxide solution, and these were corelated against odour observed in other experiments using the same samples. Values less than 3 micrograms were indicative of samples that did not have a significant degree of post-braze odour. Samples with higher values did have a very pronounced odour. The following results were obtained:-

TABLE 12

| Air Introduction Temperature (Degrees C) | Sulphate (Micrograms) |
|---|---|
| 565-580 | 2 |
| 585-600 | 1 |

EXAMPLE 14

This experiment was performed in the same way as Example 13, except that samples were exposed to oxygen by withdrawing them from the furnace at various stages in the cooling cycle. The following results were obtained.

TABLE 13

| Temperature of Brazed Sample Withdrawal (Degress C) | Sulphate (Micrograms) |
|---|---|
| >550 | 1 |
| 550 | 6 |
| 500 | 14 |
| 400 | 14 |
| 300 | 16 |

Bringing the sample into contact with oxygen after it had cooled to 550°C did not completely eliminate the odour, and bringing it into contact with oxygen after it had cooled to 500°C or less was not effective, possibly indicating that the flux must be near the solidus temperature for the most effective use of oxygen. Subsequent experiments using conventional workpieces (such as heat exchangers) under conventional brazing conditions, established that the experiments of Examples 12 and 13 do provide reliable predictions of the conditions that need to be used in order to reduce or eliminate post-bovide reliable predictions of the conditions that need to be used in order to reduce or eliminate post-brazing odour.

## Claims

1. A method of treating an aluminium workpiece which method comprises applying a coating comprising alkali metal and halogen values to the surface thereof, heatng the coated workpiece in an inert atmoshpere, bringing the heated workpiece into contact with an oxidizing atmosphere, maintaining the coated workpiece in contact with the oxidizing atmosphere at a temperature of at least the lower of 550°C and 95% of the solidus temperature of the coating expressed in °K, provided that when the coating consists of potassium/aluminium fluorides the temperature is at least 550°C, and cooling the workpiece to ambient temperature.

2. A method as claimed in claim 1, wherein the coating has a solidus temperature below 560°C, and the temperature at which the coated workpiece is maintained in contact with the oxidizing atmosphere is from 520°C to 630°C.

3. A method as claimed in claim 1, wherein the coating has a solidus temperature of at least 560°C, and the temperature at which the coated workpiece is maintained in contact with the oxidizing atmosphere is from 550°C to 630°C.

4. A method as claimed in any one of claims 1 to 3, wherein the coated workpiece is maintained in contact with the oxidizing atmosphere for from 0.5 to 15 minutes.

5. A method as claimed in any one of claims 1 to 4, wherein the coating is applied at a dry weight of 3 -15 g/m² of surface.

6. A method as claimed in any one of claims 1 to 5, wherein the coating comprises a potassium aluminium fluoride brazing flux.

7. A method as claimed in claim 6, wherein the brazing flux contains also an alkaline earth metal salt.

8. A method as claimed in claim 6, wherein the brazing flux contains also another alkali metal in an amount to depress the solidus temperature.

9. A method as claimed in any one of claims 1 to 8, wherein the workpiece is heated to a temperature to melt the coating.

10. A method as claimed in any one of claims 1 to 9 performed in conjuction with brazing, wherein the coating is a brazing flux, the workpiece is heated in an inert atmosphere to a temperature to effect brazing and is thereafter brought into contact with the oxidizing atmosphere.

11. A method as claimed in claim 10, wherein brazing is performed in a furnace and the oxidizing atmosphere thereafter admitted to the furnace.

12. A method as claimed in any one of claims 1 to 11, wherein the workpiece is a heat exchanger.

CORROSION RATING AFTER 13 DAYS IN SWAT FOR FLUX-COATED #12 BRAZING SHEET HEAT-TREATED WITH
VARIOUS TEMPERATURE SOAKS IN 5 v/v% OXYGEN

FIG.1

EP 0 347 106 A1

PITTING AFTER 13 DAYS IN SWAT FOR FLUX-COATED #12 BRAZING SHEET HEAT-TREATED WITH VARIOUS TEMPERATURE SOAKS IN 5 v/v% OXYGEN

FIG.2

EP 0 347 106 A1

WEIGHT LOSS AFTER 13 DAYS IN SWAT FOR FLUX-COATED #12 BRAZING SHEET HEAT-TREATED WITH VARIOUS
TEMPERATURE SOAKS IN 5 v/v% OXYGEN

FIG.3

EP 0 347 106 A1

CORROSION RATING AFTER 13 DAYS IN SWAT FOR FLUX-COATED AA3003 ALLOY HEAT-TREATED WITH
VARIOUS TEMPERATURE SOAKS IN 5 v/v% OXYGEN

FIG.4

EP 0 347 106 A1

WEIGHT LOSS AFTER 13 DAYS IN SWAT FOR FLUX-COATED AA3003 ALLOY HEAT-TREATED WITH VARIOUS
TEMPERATURE SOAKS IN 5 v/v% OXYGEN

FIG.5

EP 0 347 106 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 655 385 (K. SUZUKI et al.) * Columns 5,6; example 1 * | 1 | B 23 K 1/00 B 23 K 35/36 B 23 K 35/38 C 23 C 8/10 |
| A,D | FR-A-2 306 775 (ALCAN RESEARCH AND DEVELOPMENT) * Example 3 * | 1 | |
| A | US-A-4 579 605 (H. KAWASE et al.) | 1 | |
| A | PATENT ABSTRACTS OF JAPAN, vol. 7, no. 246 (M-253)[1391], 2nd November 1983; & JP-A-58 132 394 (HITACHI SEISAKUSHO K.K.) 06-08-1983 | 7,8 | |
| A | PATENT ABSTRACTS OF JAPAN, vol. 8, no. 203 (M-326)[1640], 18th September 1984; & JP-A-59 92 162 (HITACHI SEISAKUSHO K.K.) 28-05-1984 | 1 | |
| A | WELDING JOURNAL, vol. 57, no. 12, December 1978, pages 23-28; W.E. COOKE et al.: "Furnace brazing of aluminum with a non-corrosive flux" | . | TECHNICAL FIELDS SEARCHED (Int. Cl.4) B 23 K C 23 C |

The present search report has been drawn up for all claims

| Place of search | Date of completion of the search | Examiner |
|---|---|---|
| THE HAGUE | 07-09-1989 | MOLLET G.H.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P0401)